# EUROPEAN PATENT APPLICATION

(11) **EP 1 248 331 A1**
(43) Date of publication of application: **09.10.2002**
(21) Application number: 01303269.3
(22) Date of filing: 06.04.2001
(51) Int. Cl.: H01S 3/067, H01S 3/094, H04B 10/17

(54) **L-band optical fiber amplifier**

(71) Applicant: Mercury Corporation, Incheon 404-250 (KR)
(72) Inventor: Park, Sang Woork, Seodaemoon-gu, Seoul, 120-113 (KR); Lee, Kyu Haeng, Suwon-si, Kyunggi-do, 440-320 (KR); Jo, Sung Chil, 1004 Kangseo-gu, Seoul 157-040 (KR); Kim, Seung Taek, 103 Nam-gu, Incheon, 402-201 (KR); Lee, Don Han, 405-506 Yusong-gu, Taejon, 305-390 (KR)
(74) Representative: Shackleton, Nicola

(57) **Abstract**

Disclosed relates to an L-band optical fiber amplifier which amplifies an L-band optical signal (S) of 1570nm to 1610nm. In general, when a pumping light of 980nm for example, output from a pumping light generating laser diode (34), is supplied to an erbium doped fiber EDF (35), an amplified spontaneous emmission ASE having a bandwidth of 1530nm to 1560nm, namely, C-band is generated. The L-band optical fiber amplifier of the invention is configured in a manner that ASE transmitted in the backward direction, or a predetermined wavelength light selected from the bandwidth of 1530nm to 1560nm is reflected by a reflecting means (37) and re-injected to EDF (35). A fiber bragg grating FBG or a reflecting mirror is applied as the reflecting means (37). The reflected light from the reflecting means is re-injected to EDF (35) and acts as the pumping light, thus increasing the amplification gain for the L-band input light remarkably.

## Description

### BACKGROUND OF THE INVENTION

### 1. Field of the Invention

The present invention relates to an optical fiber amplifier, specifically, to an L-band optical fiber amplifier which increases amplification gain of L-band optical signals by using an amplified spontaneous emission ASE backwardly output from an erbium doped fiber EDF as a pumping light in a manner that the backward ASE is re-injected into EDF through a reflecting means.

### 2. Description of the Related Art

In general, optical communication systems apply optical signals having wavelength of 1530nm to 1560nm, namely, C-band. However, there have been studied to use optical signals having wavelengths of 1570nm to 1610nm, namely, L-band, according to recent demands for transmitting information of huge volume and for accommodating advanced communication techniques.

Meanwhile, it is necessary to provide an optical fiber amplifier compensating for the gain drop of optical signals, caused while transmitting through an optical cable in the optical communication system. The optical fiber amplifier generally applies an erbium doped fiber EDF which doped with an erbium ion, the rare earth ion. The optical fiber amplifier applying EDF has a structure that optical signals and a pumping light are supplied to EDF. This fundamental structure is adapted both to the optical fiber amplifiers for C-band and for L-band.

The methods for constructing the L-band optical fiber amplifier are well known such that a method for using a pumping light of 1550nm, a method for setting length of EDF to be long, and the like. Here, the method for using a pumping light of 1550nm needs a laser diode for generating the pumping light. The laser diode has some drawbacks that the manufacturing process is very complicated, and therefore its cost is increased too much. Accordingly, the methods for extending the length of EDF have been widely considered.

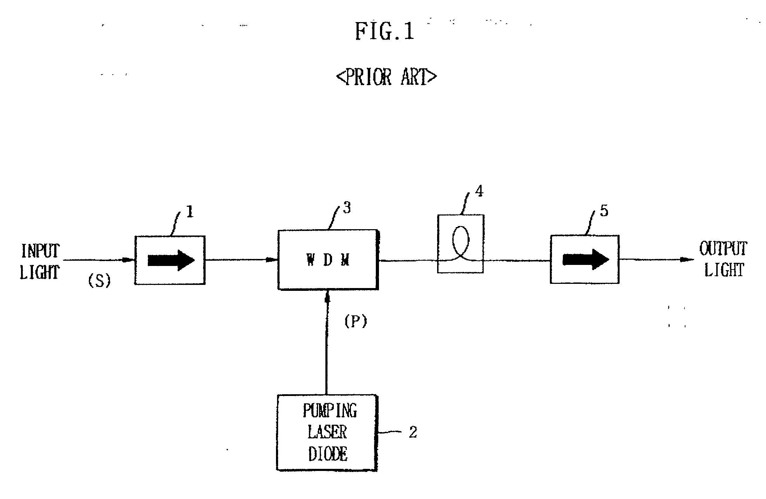

Fig. 1 shows a structure of a conventional L-band optical fiber amplifier. A pumping laser diode 2 generates a pumping light (P) of 980nm for example, the same way with that of C-band optical fiber amplifier. The pumping light (P) output from the laser diode 2 is supplied to a wavelength division multiplexer WDM 3. An input light (S) is applied to WDM 3 through an isolator 1 as an optical signal. Then, WDM 3 forwards the input signal (S) and the pumping light (P) to EDF 4, which has a length of 70m in general adapted to the L-band optical fiber amplifier. The optical signal (S) amplified by EDF 4 is output through an isolator 5. When the pumping light of 980nm is input to EDF 4, the rare earth ion, i.e., erbium ion, doped on EDF is excited to produce amplified spontaneous emission ASE having a bandwidth of 1530nm to 1560nm. Here, since the length of EDF 4 is set to be long, the ASE forwarding through EDF 4 can be used as the pumping light repeatedly, thus amplifying the optical signals of 1570nm to 1610nm substantially.

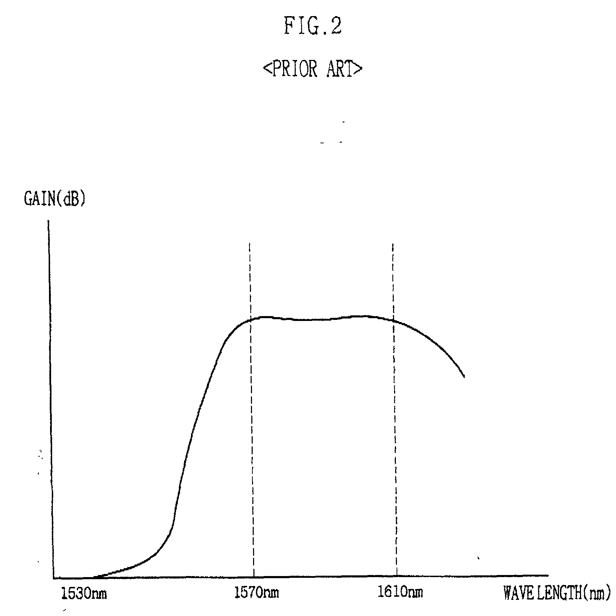

As shown in Fig. 2, the amplification gain according to the above structure becomes flat relatively in the bandwidth of 1570nm to 1610nm.

However, since the pumping light having a bandwidth of 1530 to 1560nm is generated through EDF in the above structure, the length of EDF gets longer, thus increasing the manufacturing cost of the L-band optical fiber amplifier.

### BRIEF SUMMARY OF THE INVENTION

Accordingly, the present invention is directed to an L-band optical fiber amplifier that substantially obviates one or more of the problems due to limitations and disadvantages of the related art.

An object of the present invention is to provide an L-band optical fiber amplifier which can amplify an optical signal having a long-wavelength bandwidth, not providing an additional expensive pumping laser diode.

Another object of the present invention is to provide an L-band optical fiber amplifier which can reduce length of EDF and pumping power applied therein as much as compared with that of conventional L-band optical fiber amplifier.

To accomplish an object in accordance with a first aspect of the present invention, there is provided an L-band optical fiber amplifier comprising: an erbium doped fiber EDF, provided on an optical path, for amplifying optical signals transmitted through the optical path; a pumping light generating means generating a predetermined pumping light; a coupling means coupling the pumping light to the optical path; and a reflecting means, established in front of EDF, for re-injecting a backward amplified spontaneous emission (ASE), output backwardly from EDF, to EDF.

To accomplish another object in accordance with the first aspect of the invention, the reflecting means includes: a coupling means for guiding the backward ASE from the optical path to a reflecting mirror and for coupling an output light reflected from the reflecting mirror to the optical path; and a reflecting mirror reflecting the ASE input from the coupling means.

To accomplish another object in accordance with a second aspect of the present invention, there is provided an L-band optical fiber amplifier comprising: an erbium doped fiber, provided on an optical path, for amplifying optical signals transmitted through the optical path; a pumping light generating means generating a predetermined pumping light; a coupling means coupling the pumping light to the optical path; and a reflecting means, established in front of the erbium doped fiber, for reflecting and re-injecting a predetermined wavelength light among the backward ASE, output backwardly from the erbium doped fiber, to the erbium doped fiber.

Furthermore, to accomplish another object in accordance with the second aspect of the invention, the predetermined wavelength light is set selectively within a range of 1530nm to 1560nm, preferably, to a wavelength around 1550nm.

Moreover, to accomplish another object in accordance with the second aspect of the invention, the reflecting means includes: a first coupling means for guiding the backward ASE from the optical path to a second coupling means, and for coupling an output light from the second coupling means to the optical path; a second coupling means for transmitting the backward ASE from the first coupling means to a tunable filter, and for coupling an output light from the tunable filter to the first coupling means; and a tunable filter filtering a predetermined wavelength light among the backward ASE input from the second coupling means.

Besides, to accomplish another object in accordance with the second aspect of the invention, the reflecting means includes: a coupling means for providing the backward ASE from the optical path to a fiber bragg grating, and for coupling an output light from the fiber bragg grating to the optical path; a fiber bragg grating reflecting a predetermined wavelength light among the backward ASE input from the coupling means.

In addition, to accomplish another object in accordance with the second aspect of the invention, the reflecting means further includes a fiber bragg grating, provided on the optical path, for reflecting a predetermined light.

According to the present invention, the backward ASE having a bandwidth of 1530nm to 1560nm output backwardly from EDF, preferably, only the backward ASE of a wavelength around 1550nm, is reflected by the reflecting means and re-injected to EDF, thus acting as the pumping light. Therefore, it is possible to increasing the amplification gain for L-band optical signal remarkably, without any additional expensive laser diode for supplying the pumping light.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention:

In the drawings:
Fig. 1 shows a structure of a conventional L-band optical fiber amplifier;
Fig. 2 is a graph showing an amplification characteristic of the L-band optical fiber amplifier in Fig. 1;
Fig. 3 illustrates a structure of an L-band optical fiber amplifier in accordance with a first embodiment of the present invention;
Fig. 4 depicts another structure of an L-band optical fiber amplifier in accordance with a second embodiment of the present invention;
Fig. 5 shows another structure of the L-band optical fiber amplifier in Fig. 4;
Fig. 6 denotes another structure of an L-band optical fiber amplifier in accordance with a third embodiment of the present invention;
Fig. 7 shows a filtering characteristic of a fiber bragg grating depicted in Fig.6;
Fig. 8 illustrates another structure of an L-band optical fiber amplifier in accordance with a fourth embodiment of the present invention; and
Figs. 9(A) and 9(B) are graphs demonstrating test results of amplification gain according to total powers and wavelengths of input optical signals with the preferred structure in Fig. 8.

### DETAILED DESCRIPTION OF THE INVENTION

Reference will now be made in detail to the preferred embodiments of the present invention, examples of which are illustrated in the accompanying drawings.

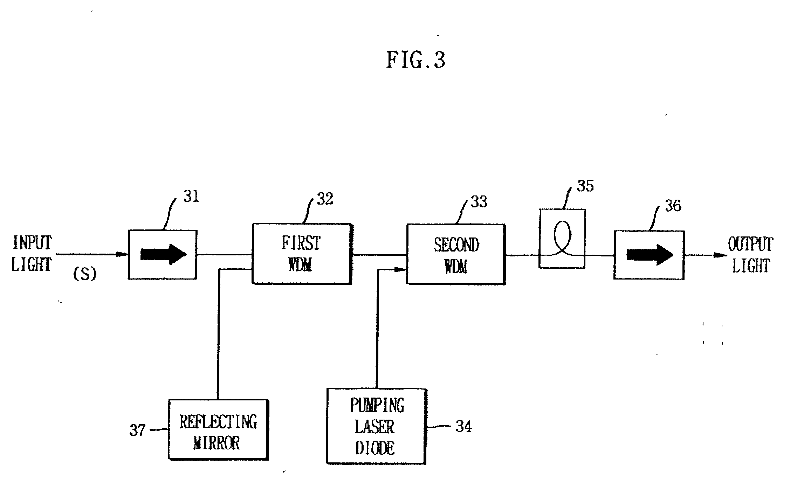

Now referring to Fig. 3, illustrating a structure of an L-band optical fiber amplifier in accordance with a first embodiment of the invention, an optical signal (S) is input to a second WDM 33 by way of a first isolator 31 and a first WDM 32. A pumping light having a wavelength of 980nm, for example, output from a pumping laser diode 34 is supplied to the second WDM 33. The second WDM 33 forwards the input light (S) and the pumping light (P) to an L-band EDF 35. An output light of EDF 35 travels through a second isolator 36. Here, the present structure amplifies the input light (S) in the same manner with that of Fig. 1 that the pumping light (P) and the input signal (S) are transmitted to EDF 35 through the second WDM 33. However, according to the first embodiment of the invention, the length of EDF 35 is set to approximately 50m to 60m, shorter than that of Fig. 1, approximately 70m.

Meanwhile, a reflecting mirror 37 is provided in front of the first WDM 32. The reflecting mirror 37 reflects and re-injects the light, output backwardly from EDF 35 and input through the second and first WDMs 33 and 32 in sequence, to the first WDM 32.

As is generally known, when the pumping light output from the laser diode 34 is supplied to EDF through the second WDM 33, the pumping light stimulates the erbium ion of EDF to produce the amplified spontaneous emission ASE having a bandwidth of 1530nm to 1560nm. Here, the ASE includes a forward ASE travels in the same direction with the optical signal and a backward ASE transmitted backwardly in the opposite direction to the optical signal. The forward ASE is transmitted through EDF 35 and acts as the pumping light, thus amplifying the L-band optical signal, the same way with the conventional L-band optical fiber amplifier.

The backward ASE output from EDF 35 is supplied to the first WDM 32 through the second WDM 33. The first WDM 32 guides the backward ASE to the reflecting mirror 37. Next, the reflecting mirror 37 reflects the backward ASE to EDF 35 through the second WDM 33. Consequently, the reflected ASE re-injected to EDF 35 acts as the pumping light to amplify the L-band optical signal. That is, the backward ASE output from EDF 35 is re-injected to EDF 35 through a reflecting means including the first WDM 32 and the reflecting mirror 37, thus acting as the pumping light.

According to the above structure, since the amplification gain of EDF 35 can be increased by means of the backward ASE, it is possible to reduce the length of EDF 35 as much as compared with the conventional EDF, maintaining the same amplification efficiency.

Meanwhile, the reflecting mirror of the above structure reflects all of the backward ASE output from EDF 35, which ensures a sufficient supply of pumping light to EDF 35, thus increasing the amplification gain most effectively. However, the ASE output from EDF 35 may include a light of 1530nm or less, or a light of 1560nm or more, other than the light of 1530nm to 1560nm. Here, the light of 1560nm or more corresponds to the region of the optical signal for the L-band optical fiber amplifier. If the ASE of 1560nm or more is input to EDF 35, corresponding ASE doesn't act as the pumping light, but contribute to exhausting the pumping light on the contrary, thus deteriorating the amplification efficiency. Besides, the ASE of 1560nm or more functions as a noise against a normal optical signal.

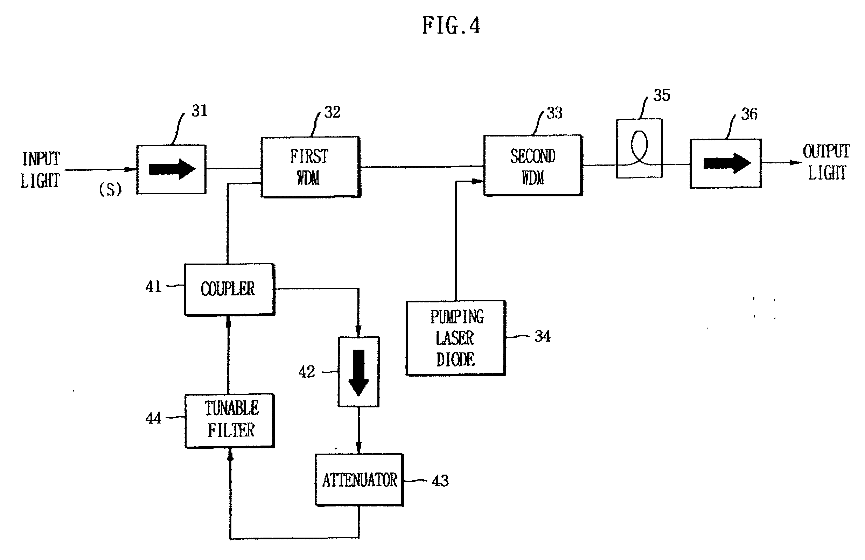

Fig. 4 illustrates another structure in accordance with a second embodiment of the invention, the structure being made in consideration of the drawbacks discussed in the above structure. In Figs. 3 and 4, identical components are indicated by identical reference numerals, and the detailed description will be omitted. With reference to Fig. 4, the reflecting means has a ring-shaped structure comprising a coupler 41, a third isolator 42, an attenuator 43 and a tunable filter 44. That is, the backward ASE transmitted through the first WDM 32 is supplied to the third isolator 42 by means of the coupler 41. Then, the backward ASE is output from the third isolator 42 is transmitted to the tunable filter 44 through the attenuator 43. Here, the attenuator 43 attenuates the backward ASE power to obtain a preferable value of the amplification gain. The tunable filter 44 selects a specified wavelength bandwidth of passing light, such as a wavelength bandwidth in the range of 1530nm to 1560nm, more desirably, a light having a wavelength around 1550nm. As the inventor's test results, the best amplification efficiency was observed when the light around 1550nm among the backward ASE is supplied to EDF 35 through the tunable filter. Next, the output light of the tunable filter 44 is sent to the first WDM 32 by way of the coupler 41. Then, the light is re-injected to EDF 35 by the second WDM 33, the same way with the previous embodiment.

In the above structure, the ASE backwardly output from EDF 35 is transmitted to the coupler 41 by way of the second and first WDM 33 and 32. Then, the backward ASE input to the coupler 41 is forwarded to the tunable filter 44 by way of the third isolator 42 and the attenuator 43. The tunable filter 44 filters the backward ASE input from the attenuator 43 to filter the light having a wavelength around 1550nm. Next, the output light of the tunable filter 44 is re-injected to EDF 35 by way of the coupler 41, the first WDM 32 and the second WDM 33 in sequence. According to the above preferred embodiment of the invention, it is possible to provide a more stabilized optical fiber amplifier, in which the most desired light is passed by the tunable filter 44 and used as the pumping light.

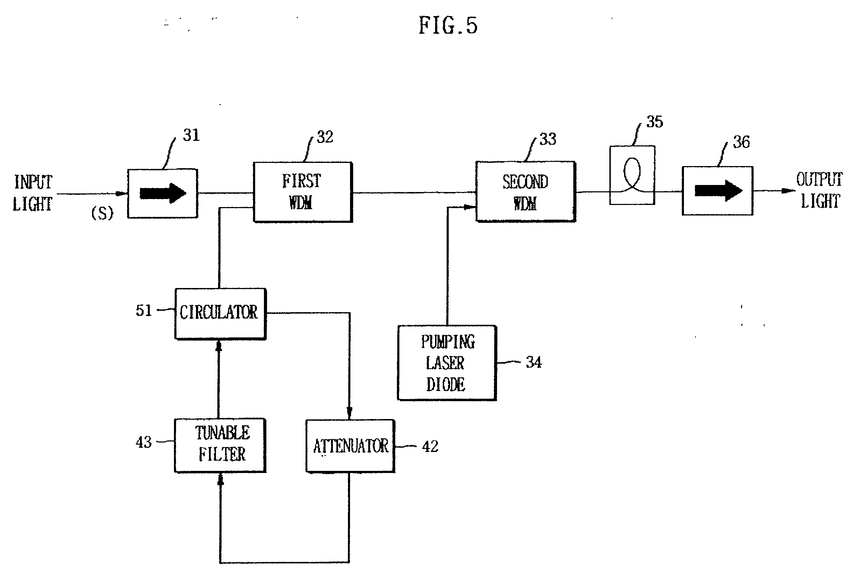

Now referring to Fig. 5, a circulator 51 is applied instead of the coupler 41 of Fig. 4. The backward ASE transmitted from the first WDM 32 is supplied to the tunable filter through the attenuator 42. Then, the light having a wavelength around 1550nm output from the tunable filter 43 is returned to the first WDM 32. The preferred embodiment depicted in Fig. 5 is operated in the same manner with that of Fig. 4, and the detailed description will be omitted.

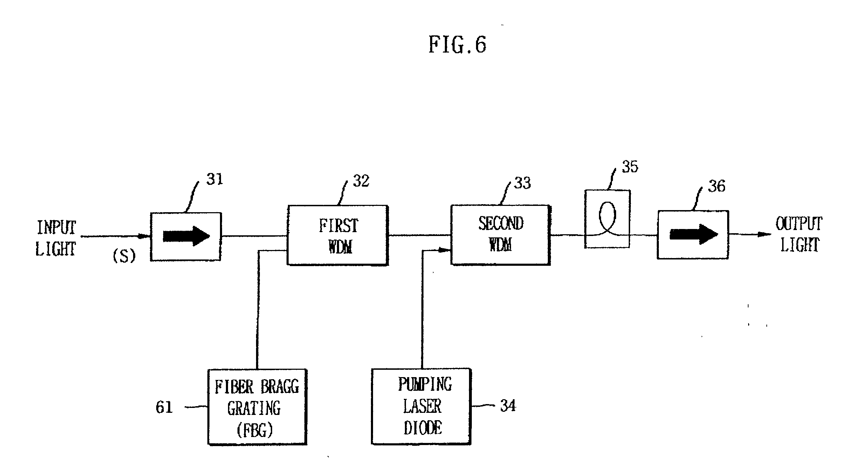

With reference to Fig. 6 showing another structure of an L-band optical fiber amplifier in accordance with a third embodiment of the invention, a fiber bragg grating FBG 61 is applied as the reflecting means. The backward ASE transmitted from the first WDM 32 is supplied to FBG 61. Then, the reflected light from FBG 61 is forwarded to EDF 35 through the first and second WDMs 32 and 33 in sequence, thus acting as pumping light.

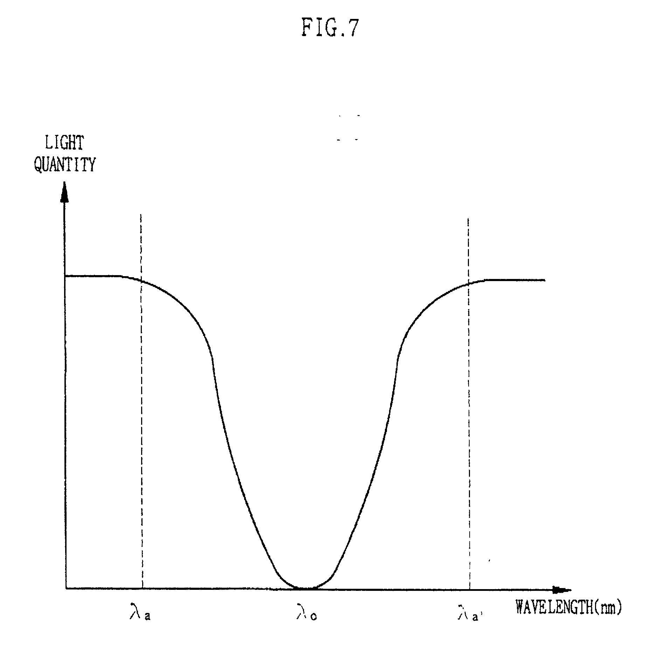

Referring to Fig. 7, FBG 61 has a characteristic that the filtering factor deteriorates remarkably in a specified bandwidth, λa to λa'. That is, FBG 61 doesn't pass a light of specified bandwidth, λa to λa', but reflects. Here, the reflected wavelength of FBG 61 can be set when manufacturing easily. In the present embodiment, the reflected wavelength is set within the range of 1530nm to 1560nm, preferably, to a wavelength around 1550nm. Moreover, FBG 61 is configured in a manner that its edge is non-reflectively coated so that the passed light of FBG 61 can not be returned. According to the present embodiment, the backward ASE output from EDF 35 is supplied to FBG 61 through the second and first WDMs 33 and 32 in sequence. Then, the light having a wavelength around 1550nm reflected from FBG 61 is re-injected to EDF 35 by way of the first and second WDMs 32 and 33 in sequence. The reflected light from FBG 61 to EDF 35 acts as the pumping light, thus increasing the amplification efficiency of EDF 35 for the L-band signal.

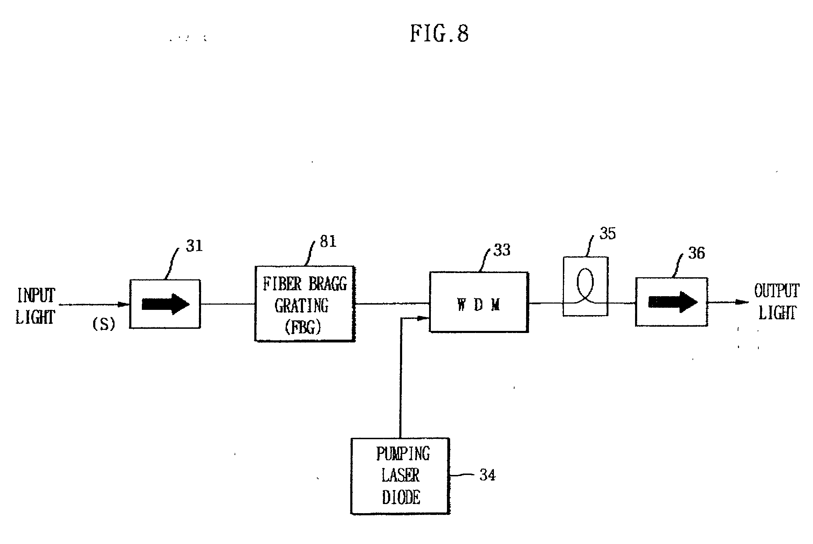

With reference to Fig. 8, showing another structure of an L-band optical fiber amplifier in accordance with a fourth embodiment of the invention, FBG 81 is provided between the first isolator and WDM 33. Here, FBG 81 is set to intercept a wavelength bandwidth in the range of 1530nm to 1560nm, more desirably, a wavelength around 1550nm. When an input light having a long-wavelength bandwidth is input through the first isolator 31, the light is forwarded to EDF 35 by way of FBG 81 and WDM 33. Here, a pumping light of 980nm output from a pumping laser diode 34 is supplied to EDF 35 through WDM 33. Meanwhile, when the pumping light of 980nm is input to EDF 35 in the same manner with the previous embodiment, the backward ASE having a bandwidth of 1530nm to 1560nm is output from EDF 35 and input to FBG 81 through WDM 33. Then, the intercepted light having a wavelength around 1550nm of FBG 81 is reflected and re-injected to EDF 35 through WDM 33. However, the other backward light passed through FBG 81 is applied to the first isolator 31 and removed therein. Whereas, the reflected ASE is re-injected to EDF 35 and acts as the pumping light, thus increasing the amplification efficiency of EDF 35 for the L-band signals.

According to the present structure, it is possible to simplify the structure of the L-band optical fiber amplifier by simply establishing FBG 81 on the optical path, without any additional WDM for extracting the backward ASE of EDF 35 from the optical path.

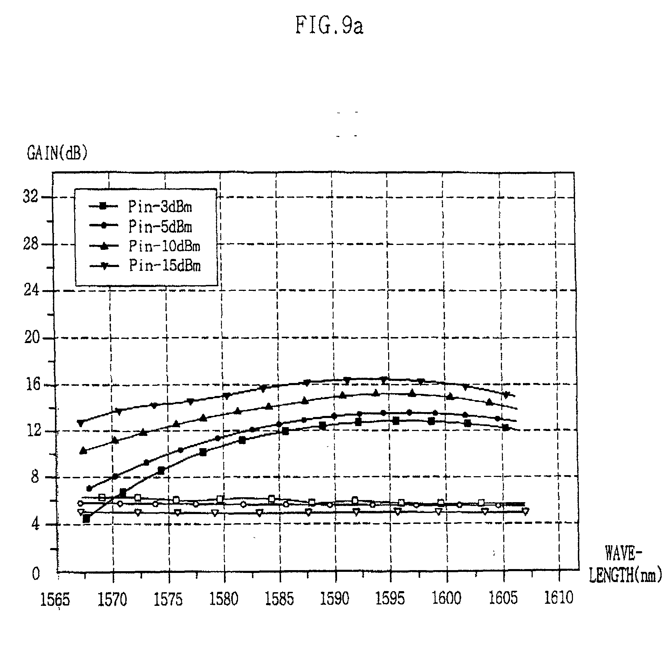

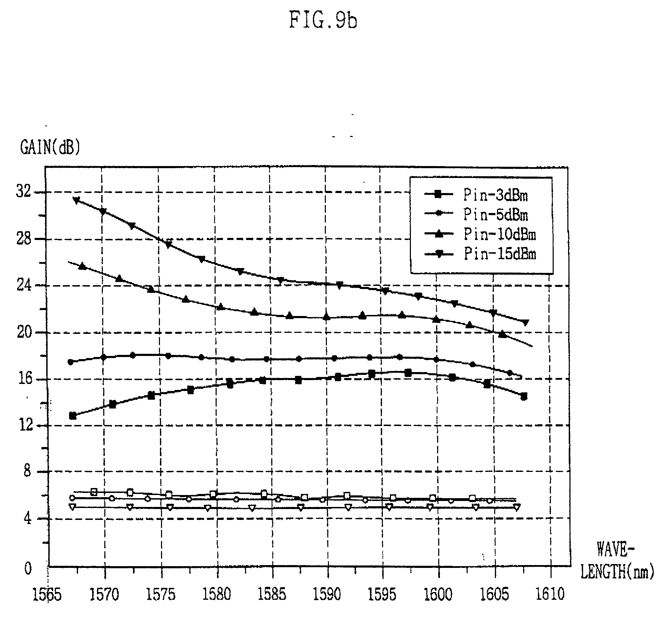

Now referring to Figs. 9(A) and 9(B), demonstrating test results of amplification gain according to total powers and wavelengths of input optical signals with the preferred structure discussed with reference to Fig. 8, Fig 9(a) denotes a test result where FBG 81 is not applied, that is, the backward ASE output from EDF 35 is not supplied to EDF 35, whereas, Fig. 9(B) illustrates a test result where FBG 81 is provided, that is, the backward ASE output from EDF 35 is re-injected to EDF 35. Besides, the test results shown in Figs. 9(A) and 9(B) are obtained under the conditions that the length of EDF 35 is 50m, the light wavelength reflected by FBG 81 is 1545nm, and the pumping light applied is of 170mW 980nm. Here, the power (Pin) of the input light (S) is variously given as -5dBm, 15dBm, -10dBm, and-15dBm. Furthermore, the curves shown at the lower part of the graphs denote the noise figures measured according to wavelengths and input powers.

As shown in Figs. 9(A) and 9(B), in case that FBG 81 is not applied, the amplification gains measured according to total powers and wavelengths of input optical signals are approximately 6dB to 16dB, whereas, in case that FBG 81 is used, the amplification gains are approximately 14dB to 24dB, by which it is proved that the structure in accordance with the invention can increase the amplification gain for L-band light prominently. Meanwhile, according to the preferred embodiments discussed above, the reflecting means for reflecting the backward ASE output from EDF 35 are provided just in front of WDM 33 for supplying the pumping light output from the pumping laser diode 34 to the optical path. However, it is not restricted to position the reflecting means to a specified place. That is, the reflecting means may be positioned between WDM 33 and EDF 35. According to the present invention, it is possible to install the reflecting means in any place where the backward ASE output from EDF 35 can be reflected and re-injected to EDF 35.

Therefore, the L-band optical fiber amplifier according to the present invention can increase the amplification gain efficiently without applying an expensive laser diode for generating a pumping light of 1550nm for example.

Furthermore, the L-band optical fiber amplifier, according to the invention constructed in a manner that the backward ASE output from EDF is re-injected to EDF, can increase the amplification gain noticeably, thus reducing the length of EDF and pumping power applied therein as much as compared with the that of conventional EDF for the same amplification gain.

It will be apparent to those skilled in the art that various modifications and variations can be made in the L-band optical fiber amplifier of the present invention without departing from the spirit or scope of the invention. Thus, it is intended that the present invention cover the modifications and variations of this invention provided they come within the scope of the appended claims and their equivalents.

## Claims

1. An L-band optical fiber amplifier comprising:
an erbium doped fiber, provided on an optical path, for amplifying optical signals transmitted through said optical path;
a pumping light generating means generating a predetermined pumping light;
a coupling means coupling said pumping light to said optical path; and
a reflecting means, established in front of said erbium doped fiber, for reflecting and re-injecting a backward amplified spontaneous emission, output backwardly from said erbium doped fiber, to said erbium doped fiber.

2. The L-band optical fiber amplifier as recited in claim 1,
wherein said reflecting means includes:
a coupling means for guiding said backward amplified spontaneous emission from said optical path to a reflecting mirror and for coupling an output light reflected from said reflecting mirror to said optical path; and
a reflecting mirror reflecting said amplified spontaneous emission input from said coupling means.

3. An L-band optical fiber amplifier comprising:
an erbium doped fiber, provided on an optical path, for amplifying optical signals transmitted through said optical path;
a pumping light generating means generating a predetermined pumping light;
a coupling means coupling said pumping light to said optical path; and
a reflecting means, established in front of said erbium doped fiber, for reflecting and re-injecting a predetermined wavelength light among said backward amplified spontaneous emission, output backwardly from said erbium doped fiber, to said erbium doped fiber.

4. The L-band optical fiber amplifier as recited in claim 3,
wherein said predetermined wavelength light is set selectively within a range of 1530nm to 1560nm.

5. The L-band optical fiber amplifier as recited in claim 3,
wherein said predetermined wavelength light is around 1550nm.

6. The L-band optical fiber amplifier as recited in claim 3,
wherein said reflecting means includes:
a first coupling means for guiding said backward amplified spontaneous emission from said optical path to a second coupling means, and for coupling an output light from said second coupling means to said optical path;
a second coupling means for transmitting said backward amplified spontaneous emission from said first coupling means to a tunable filter, and for coupling an output light from said tunable filter to said first coupling means; and
a tunable filter filtering a predetermined wavelength light among said backward amplified spontaneous emission input from said second coupling means.

7. The L-band optical fiber amplifier as recited in claim 6 further comprising:
an attenuating means attenuating a power of said backward amplified spontaneous emission transmitted from said second coupling means.

8. The L-band optical fiber amplifier as recited in claim 6,
wherein said second coupling means is a circulator.

9. The L-band optical fiber amplifier as recited in claim 3,
wherein said reflecting means includes:
a coupling means for guiding said backward amplified spontaneous emission from said optical path to a fiber bragg grating, and for coupling an output light from said fiber bragg grating to said optical path;
a fiber bragg grating reflecting a predetermined wavelength light among said backward amplified spontaneous emission input from said coupling means.

10. The L-band optical fiber amplifier as recited in claim 3,
wherein said reflecting means further includes a fiber bragg grating, provided on said optical path, for reflecting a predetermined light.
